Europäisches Patentamt

European Patent Office

Office européen des brevets

(19)

(11) Veröffentlichungsnummer: **0 141 979**
**A1**

# (12) EUROPÄISCHE PATENTANMELDUNG

(21) Anmeldenummer: 84111299.8

(51) Int. Cl.⁴: **G 01 F 1/60**

(22) Anmeldetag: 21.09.84

(30) Priorität: 21.09.83 DE 3334152

(43) Veröffentlichungstag der Anmeldung: 22.05.85
Patentblatt 85/21

(84) Benannte Vertragsstaaten: **FR GB IT**

(71) Anmelder: **Fischer & Porter GmbH,**
**Postfach 1843 Dransfelder Strasse 2,**
**D-3400 Göttingen 1 (DE)**

(72) Erfinder: **Geisler, Gottfried, Ing.-Grad., Olenhuser Weg 6,**
**D-3400 Göttingen (DE)**
Erfinder: **Breithaupt, Jörg-Ulrich, Ing.-Grad.,**
**Lohbergstrasse 4, D-3400 Göttingen (DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel**
**Möhlstrasse 22, D-8000 München 80 (DE)**

(54) **Magnetisch induktiver Durchflussmesser.**

(57) Magnetisch induktiver Durchflussmesser mit einer Schaltungsanordnung zur Speisung wenigstens einer ein Magnetfeld erzeugenden Erregerwicklung (2) während vorgegebener, aufeinanderfolgender Zeitspannen mit einem auf konstante Stärke geregelten Strom wechselnder Polarität über eine Kommutatorschaltung (6), bei dem die Schaltungsanordnung einen Regelkreis mit einem Komparator (38) enthält, der ein dem durch die Erregerwicklung (2) fliessenden Ist-Strom entsprechendes Ist-Signal mit einem dem Soll-Strom entsprechenden Soll-Signal vergleicht und nach Massgabe einer Differenz dieser Signale einen Schaltregler (50) steuert, der seinerseits über einen Schalter (26) den über die Kommutatorschaltung (6) der Erregerwicklung (2) zugeführten Speisestrom steuert, dadurch gekennzeichnet, dass zwischen dem Schalter (26) und der Kommutatorschaltung (6) ein Filter (28, 32) angeordnet ist, das von dem Schaltregler (50) herrührende, impulsförmige Schwankungen des Speisestroms glättet, so dass der durch ein zweiadriges Erregerkabel (4) von der Kommutatorschaltung (6) der Erregerwicklung (2) zugeführte Speisestrom eine konstante Stärke wechselnder Polarität hat.

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA Dr. J. Prechtel

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN
DSCH

— 1 —

FISCHER & PORTER GMBH

D-3400 Göttingen

## Magnetisch induktiver Durchflußmesser

Die Erfindung betrifft einen magnetisch induktiven
Durchflußmesser nach dem Oberbegriff des Anspruchs 1.

Bei einem bekannten Durchflußmesser dieser Art ist
der der Erregerwicklung zugeführte Speisestrom impulsförmig oder hat jedenfalls impulsförmige Spitzen, die
vom Schaltregler herrühren. Erst die Erregerwicklung
macht infolge ihrer Induktivität aus dem Speisestrom
einen Gleichstrom. Die Folge ist, daß die Stärke des
Speisestroms, der durch das Erregerkabel fließt, auf
dem Weg zur Erregerwicklung abnehmen muß und daher
der die Erregerwicklung durchfließende Speisestrom
von der Länge des Erregerkabels abhängt. Dadurch ergeben sich Fehler im Meßergebnis, wenn man nicht in jedem Einzelfall die Länge des Erregerkabels berücksichtigt.

Aufgabe der Erfindung ist es, die Meßwerte eines magnetisch induktiven Druchflußmessers von der Länge des Erregerkabels unabhängig zu machen.

Die Lösung dieser Aufgabe ist im Kennzeichen des Anspruchs 1 angegeben.

Für die Erfindung ist maßgebend, daß sich kurz vor der Erregerwicklung in der Schaltung keine elektronischen Bauteile befinden, die wegen Schaltvorgängen oder dergleichen Stromspitzen erzeugen. Der Schaltregler und der Kommutator liegen vielmehr am Erregerkabel-Eingang.

Der Schaltregler ist bevorzugt so ausgebildet, wie dies in den Ansprüchen 2 und 3 angegeben ist.

Um die Steuerung des Erregerstroms galvanisch vom Komparator zu entkoppeln, ist bevorzugt eine Ausbildung gemäß Anspruch 4 vorgesehen.

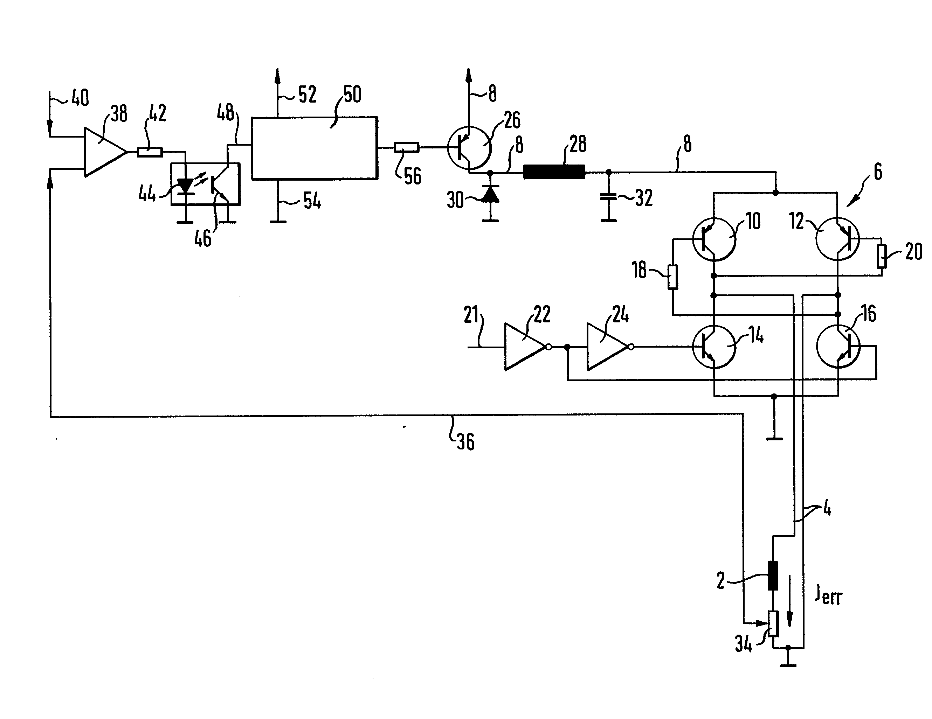

Die Erfindung wird im folgenden anhand eines Ausführungsbeispiels unter Hinweis auf die beigefügte Zeichnung erläutert:

Die in der Zeichnung dargestellte Schaltungsanordnung dient zur Speisung einer ein Magnetfeld wechselnder Polarität erzeugenden Erregerwicklung 2. Die Erregerwicklung 2 wird über ein zweiadriges Erregerkabel 4 hierzu über eine Kommutatorschaltung 6 von einer Stromquelle gespeist, die an die Leitung 8 angeschlossen ist. Der Kommutator 6 weist in bekannter Weise geschaltete Transistoren 10, 12, 14, 16 und Widerstände 18, 20 auf.

- 3 -

Ein Taktgeber, der die Richtung des durch die Erregerwicklung fließenden Speisestromes    festlegt, ist
über eine Leitung 21 und einen Inverter 22 an die
Basis des Transistors 16 angeschlossen und außerdem
an einen zweiten Inverter 24, der an die Basis des
Transistors 14 angeschlossen ist.

In der Leitung 8 liegen in Reihe ein Transistor 26 und eine
Drosselspule (Induktivität) 28. Zwischen der Drosselspule 28 und den
Transistor 26 ist die Leitung 8 über eine Diode 30 geerdet. Zwischen der Drosselspule 28  und der Kommutatorschaltung 6  ist  die Leitung 8 über einem Kondensator
32 geerdet. Die Drosselspule 28  und der Kondensator 32
bilden ein Tiefpaßfilter, das Stromspitzen höherer Frequenz dämpft, so daß der Kommutatorschaltung 6 ein sauberer Gleichstrom zugeführt wird.

In Reihe mit der Erregerwicklung 2 liegt ein Widerstand
34, an dem über eine Leitung 36 ein Signal abgegriffen
wird, das dem durch die Erregerwicklung 2 fließenden
Strom, also dem Ist-Strom entspricht. Dementsprechend
ist das über die Leitung 36 abgegriffene Signal ein Ist-
Signal, das in einen Komparator 38 mit einem dem Komparator 38 über die Leitung 40 zugeführten Soll-Signals
verglichen wird.Ein etwaiges Differenzsignal tritt als
Fehlersignal an einem Widerstand 42 auf, der an den
Ausgang des Komparators 38 geschaltet ist. Ein Fehlersignal am Ausgang des Widerstands 42 bringt eine in Reihe
mit dem Widerstand 42 liegende Leuchtdiode 44 mehr oder
weniger zum Leuchten, und dementsprechend wird ein von
der Leuchtdiode 44 bestrahlter Fotowiderstand 46 mehr
oder weniger leitend. Ein von dem Fotowiderstand 46
über eine Leitung 48 abgegriffenes Signal steuert einen
Schaltregler 50, der über eine Leitung 52 an einer Spannungsquelle liegt und über eine Leitung 54 geerdet ist. Der Ausgang des Schaltreglers 50 steuert über einen Widerstand 56 den Transistorschalter 26.

Die Schaltimpulse des Schaltreglers 50 bestimmen somit den Schaltzustand des Schalttransistors 26. Dem Filter aus der Drosselspule 28 und dem Kondensator 32 werden wegen der Diode 30 diese Impulse monopolar zugeführt und in dem Filter in einen Gleichstrom umgewandelt. Mit dem Kommutator 6 wird nur die Stromrichtung festgelegt, in der der Erregerstrom durch die beiden Adern des Erregerkabels 4 fließt. Tritt eine Abweichung des Ist-Stromes vom Soll-Strom ein, so wird der Komparator 38 tätig und verstellt über das optoelektronische Bauelement 44, 46 den Schaltregler 50 entsprechend.

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA    Dr. J. Prechtel

8000 MÜNCHEN 86
POSTFACH 860 820
MÜHLSTRASSE 22
TELEFON (0 89) 98 03 52
TELEX 5 22 621
TELEGRAMM PATENTWEICKMANN MÜNCHEN

DSCH

_ 1 _

P A T E N T A N S P R Ü C H E

1. Magnetisch induktiver Durchflußmesser mit einer
Schaltungsanordnung zur Speisung wenigstens einer
ein Magnetfeld erzeugenden Erregerwicklung (2)
während vorgegebener, aufeinander folgender Zeitspannen mit einem auf konstante Stärke geregelten
Strom wechselnder Polarität über eine Kommutatorschaltung (6), bei dem die Schaltungsanordnung
einen Regelkreis mit einem Komparator (38) enthält,
der ein dem durch die Erregerwicklung (2) fliessenden Ist-Strom entsprechendes Ist-Signal mit
einem dem Soll-Strom entsprechenden Soll-Signal
vergleicht und nach Maßgabe einer Differenz dieser
Signale einen Schaltregler (50) steuert, der
seinerseits über einen Schalter (26) den über die
Kommutatorschaltung (6) der Erregerwicklung (2)
zugeführten Speisestrom steuert, dadurch gekennzeichnet, daß zwischen dem Schalter (26) und der
Kommutatorschaltung (6) ein Filter (28, 32) angeordnet ist, das von dem Schaltregler (50) herrührende, impulsförmige Schwankungen des Speisestroms
glättet, s0 daß der durch ein zweiadriges Erregerkabel (4) von der Kommutatorschaltung (6) der
Erregerwicklung (2) zugeführte Speisestrom eine
konstante Stärke wechselnder Polarität hat.

2. Durchflußmesser nach Anspruch 1, dadurch gekennzeichnet, daß der Schaltregler (50) den Schalter
(26) mit einer Impulsfolge konstanten Impuls/
Pausen-Verhältnisses steuert, deren Frequenz der
Differenz zwischen dem Ist-Signal und dem Soll-
Signal entspricht.

3. Durchflußmesser nach Anspruch 1, dadurch gekennzeichnet, daß der Schaltregler (50) den Schalter
(26) mit einer Impulsfolge konstanter Frequenz
steuert, deren Impuls/Pausen-Verhältnis der Differenz zwischen dem Ist-Signal und dem Soll-Signal
entspricht.

4. Durchflußmesser nach einem der Ansprüche 1 bis 3,
dadurch gekennzeichnet, daß der Komparator (38)
an den Schaltregler (50) über ein optoelektronisches
Bauelement (44, 46) gekoppelt ist.

0141979

Europäisches
Patentamt

**EUROPÄISCHER RECHERCHENBERICHT**

Nummer der Anmeldung

| | EINSCHLÄGIGE DOKUMENTE | | EP 84111299.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 037 305 (FLOW TEC)<br>* Fig. 1-3; Seite 9, letzter Absatz - Seite 10, vorletzter Absatz * | 1 | G 01 F 1/60 |
| A | DE - A1 - 3 204 573 (TURBOWERK)<br>* Fig. 1,3; Zusammenfassung * | 1,2 | |
| A | DE - A1 - 2 942 412 (FISCHER & PORTER)<br>* Fig. 1; Seite 13, letzer Absatz * | 1,4 | |
| A | DE - A1 - 3 029 791 (AICHI)<br>* Fig. 3 * | 1 | **RECHERCHIERTE SACHGEBIETE (Int. Cl.4)**<br><br>G 01 F 1/00<br>G 01 P 5/00 |

Der vorliegende Recherchenbericht wurde für alle Patentansprüche erstellt.

| Recherchenort | Abschlußdatum der Recherche | Prüfer |
|---|---|---|
| WIEN | 11-01-1985 | BURGHARDT |